# EUROPÄISCHE PATENTSCHRIFT

(11) **EP 4 205 224 B1**
(45) Veröffentlichungstag und Bekanntmachung des Hinweises auf die Patenterteilung: **02.10.2024**
(21) Anmeldenummer: 21762653.0
(22) Anmeldetag: 11.08.2021
(51) Int. Cl.: H01M 50/105, H01M 50/178, H01M 50/211, H01M 50/54, H01M 50/553, H01M 50/562

(54) **POUCHZELLE UND STACK**
POUCH CELL AND STACK
CELLULE EN SACHET SOUPLE ET EMPILEMENT

(30) Priorität: 25.08.2020 EP 20192570
(43) Veröffentlichungstag der Anmeldung: 05.07.2023
(73) Patentinhaber: Hilti Aktiengesellschaft, 9494 Schaan (LI)
(72) Erfinder: LEPIORZ, Matthias, 09112 Chemnitz (DE); STANGER, Robert, 87600 Kaufbeuren (DE); ENDER, Moses, 9470 Buchs (CH); ZIEGLER, Bernd, 86830 Schabmünchen (DE); HAUSER, Klaus, 86830 Schwabmünchen (DE); MARTINY, Nora, 82211 Herrsching-Breitbrunn (DE); SAX, Kathrin, 86937 Scheuring (DE)
(74) Vertreter: Hilti Aktiengesellschaft Corporate Intellectual Property
(86) Internationale Anmeldenummer: PCT/EP2021/072346
(87) Internationale Veröffentlichungsnummer: WO 2022/043056

(56) Entgegenhaltungen:
- EP-A1- 1 868 257
- EP-A1- 2 958 164

## Beschreibung

Die vorliegende Erfindung betrifft eine Pouchzelle mit einer Plus-Kontaktfahne und einer Minus-Kontaktfahne, über die die Pouchzelle elektrisch kontaktiert und so beladen und entladen werden kann. Die Pouchzelle ist flächig ausgebildet und weist eine Zelloberseite sowie eine der Zelloberseite gegenüberliegende Zellunterseite auf. Die vorliegende Erfindung betrifft ebenfalls ein Stack mit wenigstens zwei solcher Pouchzellen.

Eine solche Pouchzelle ist beispielsweise aus der EP 3 588 614 A1 bekannt. Weiterer relevanter Stand der Technik ist aus den Dokumenten EP 1 868 257 A1 und EP 2 958 164 A1 bereits bekannt.

Es ist Aufgabe der vorliegenden Erfindung eine Pouchzelle, ein Stack mit wenigstens zwei Pouchzellen sowie ein Verfahren zum Herstellen eines Stacks mit einer Mehrzahl von Pouchzellen bereitzustellen, die ein einfaches und sicheres Kontaktieren begünstigen.

Bezüglich der Pouchzelle wird die Aufgabe dadurch gelöst, dass die Plus-Kontaktfahne zelloberseitig eine Leitbeschichtung und zellunterseitig eine Isolierbeschichtung aufweist und die Minus-Kontaktfahne zelloberseitig eine Isolierbeschichtung und zellunterseitig eine Leitbeschichtung aufweist, oder umgekehrt, dass die Plus-Kontaktfahne zelloberseitig eine Isolierbeschichtung und zellunterseitig eine Leitbeschichtung aufweist und die Minus-Kontaktfahne zelloberseitig eine Leitbeschichtung und zellunterseitig eine Isolierbeschichtung aufweist.

Die Erfindung schließt die Erkenntnis ein, dass Pouchzellen im Massenproduktionsprozess schwierig zu handhaben sind, da ihre Kontaktfahnen typischerweise nahe beieinanderliegen und die Pouchzellen bei unachtsamer Handhabbarkeit kurzgeschlossen werden können. Weiterhin wurde erkannt, dass Pouchzellen aufgrund ihrer Bauform zur elektrischen Kontaktierung bisher nicht - oder zumindest aber vergleichsweise schwierig - widerstandsgeschweißt werden können. Dies führt beim Massenproduktionsprozess von Batteriepacks bzw. Stacks mit Pouchzellen zu einem hohen technischen und finanziellen Aufwand für automatisierte Anlagen, welche die elektrische Kontaktierung der einzelnen Pouchzellen durchführen.

In einer besonders bevorzugten Ausgestaltung besteht die Isolierbeschichtung aus Keramik oder weist Keramik auf. Die Leitbeschichtung kann aus einer Zinnlegierung bestehen oder eine Zinnlegierung aufweisen. Es hat sich als vorteilhaft herausgestellt, wenn die Leitbeschichtung in Form einer insbesondere zinnhaltigen Lötpaste aufgebracht ist. Flussmittelanteile der Lötpaste verflüchtigen sich typischerweise beim Verschmelzen oder Verlöten der Kontaktfahnen.

Es hat sich als vorteilhaft herausgestellt, wenn die Plus-Kontaktfahne aus Aluminium besteht oder Aluminium aufweist. Die Minus-Kontaktfahne kann aus Nickel bestehen oder Nickel aufweisen. In einer weiteren bevorzugten Ausgestaltung besteht die Leitbeschichtung aus einem anderen Material als die Kontaktfahne. Es hat sich als vorteilhaft herausgestellt, wenn die Isolierbeschichtung aus einem anderen Material als die Kontaktfahne besteht.

In einer weiteren bevorzugten Ausgestaltung ist die Leitbeschichtung auf einem selbstklebenden Trägermaterial bereitgestellt, das vorzugsweise auf eine Kontaktfahne appliziert oder zu applizieren ist. Die Isolierbeschichtung kann auf einem selbstklebenden Trägermaterial bereitgestellt sein, wobei das selbstklebende Trägermaterial vorzugsweise auf eine Kontaktfahne appliziert oder zu applizieren ist.

Es hat sich als vorteilhaft herausgestellt, wenn die Plus-Kontaktfahne und die Minus-Kontaktfahne jeweils flach und zum Kontaktieren mittels Verpressens und/oder mittels Lötens ausgebildet sind. In einer weiteren bevorzugten Ausgestaltung sind die Zelloberseite und die Zellunterseite im Wesentlichen flach ausgebildet.

In einer weiteren bevorzugten Ausgestaltung weist die Leitbeschichtung eine elektrische Leitfähigkeit von wenigstens 10E6 S/m auf. Es hat sich als vorteilhaft herausgestellt, wenn die Isolierbeschichtung eine elektrische Leitfähigkeit von weniger als 1 0E-8 S/m aufweist.

Bezüglich des Stacks wird die Aufgabe dadurch gelöst, dass eine erste, insbesondere lediglich die erste der beiden Pouchzellen derart weitergebildet ist, dass die Plus-Kontaktfahne zelloberseitig eine Leitbeschichtung und zellunterseitig eine Isolierbeschichtung aufweist und die Minus-Kontaktfahne zelloberseitig eine Isolierbeschichtung und zellunterseitig eine Leitbeschichtung aufweist, oder dass die Plus-Kontaktfahne zelloberseitig eine Isolierbeschichtung und zellunterseitig eine Leitbeschichtung aufweist und die Minus-Kontaktfahne zelloberseitig eine Leitbeschichtung und zellunterseitig eine Isolierbeschichtung aufweist, und wobei sich die komplementäre Kontaktfahnen der zwei Pouchzellen jeweils überlappen. Es hat sich als vorteilhaft herausgestellt, wenn sich die komplementäre Kontaktfahnen in Stapelrichtung überlappen. In einer besonders bevorzugten Ausgestaltung sind komplementäre Kontaktfahnen in Stapelrichtung kongruent. Unter komplementären Kontaktfahnen soll insbesondere die Paarung Plus-Kontaktfahne der Pouchzellen eines ersten Typs mit Minus-Kontaktfahne der Pouchzelle eines zweiten Typs und/oder die Paarung Minus-Kontaktfahne der Pouchzelle des ersten Typs mit Plus-Kontaktfahne der Pouchzelle des zweiten Typs verstanden werden. In einer weiteren bevorzugten Ausgestaltung ist eine Mehrzahl erster und zweiter Pouchzellen vorgesehen, die alternierend gestapelt sind. Unter erster Pouchzelle soll im Rahmen der vorliegenden Anmeldung insbesondere eine Pouchzelle eines ersten Typs verstanden werden. Unter zweiter Pouchzelle soll im Rahmen der vorliegenden Anmeldung insbesondere eine Pouchzelle eines zweiten Typs verstanden werden. Es hat sich als vorteilhaft herausgestellt, wenn die erste Pouchzelle gemäß der mit Bezug auf die Pouchzelle beschriebenen Merkmale weitergebildet ist.

In einer besonders bevorzugten Ausgestaltung sind die Pouchzellen über ihre jeweiligen Verbindungselemente elektrisch miteinander kontaktiert. Vorzugsweise sind benachbarte Pouchzellen elektrisch zueinander in Reihe geschaltet. Mehrere derart elektrisch verschaltete Stacks von Pouchzellen können elektrisch parallelgeschaltet sein so - beispielsweise als Teil eines Akkupacks - der Versorgung einer elektrischen Handwerkzeugmaschine dienen.

Bezüglich des Stacks wird die Aufgabe durch ein Verfahren mit den folgenden Schritten gelöst:
- Bereitstellen einer Mehrzahl von Pouchzellen, wobei die Pouchzellen jeweils ausgestattet sind mit einer Plus-Kontaktfahne und einer Minus-Kontaktfahne, über die die Pouchzellen elektrisch kontaktiert und so beladen und entladen werden können, wobei die Pouchzellen flächig ausgebildet sind und eine Zelloberseite sowie eine der Zelloberseite gegenüberliegende Zellunterseite aufweisen,
- Durchführen eines Beschichtungsvorgangs bei Untermenge, vorzugsweise bei der Hälfte der Pouchzellen derart, dass die Plus-Kontaktfahne zelloberseitig eine Leitbeschichtung und zellunterseitig eine Isolierbeschichtung aufweist und die Minus-Kontaktfahne zelloberseitig eine Isolierbeschichtung und zellunterseitig eine Leitbeschichtung aufweist, oder dass die Plus-Kontaktfahne zelloberseitig eine Isolierbeschichtung und zellunterseitig eine Leitbeschichtung aufweist und die Minus-Kontaktfahne zelloberseitig eine Leitbeschichtung und zellunterseitig eine Isolierbeschichtung aufweist, wobei die so beschichteten Pouchzellen einen ersten Typ definieren und die verbleibenden Pouchzellen einen zweiten Typ bilden,
- Assemblieren des Stacks durch alternierendes Stapeln der Pouchzellen ersten und zweiten Typs, wobei sich komplementäre Kontaktfahnen der Pouchzellen jeweils überlappen.

Es hat sich als vorteilhaft herausgestellt, wenn der Beschichtungsvorgang vor dem Schritt des Assemblierens des Stacks durchgeführt wird. Alternativ kann der Beschichtungsvorgang nach dem Schritt des Assemblierens des Stacks durchgeführt werden. Es hat sich in dieser Alternative als vorteilhaft herausgestellt, wenn der Beschichtungsvorgang ein Applizieren eines selbstklebenden Trägermaterials einschließt auf jeweils dem die Leitbeschichtung und/oder die Isolierbeschichtung bereitgestellt ist.

In einer besonders bevorzugten Ausgestaltung wird das Stack durch Verpressen und/oder durch Verschmelzen elektrisch kontaktiert.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine Pouchzelle des Standes der Technik;
- Figur 2: ein erstes bevorzugtes Ausführungsbeispiel einer erfindungsgemäßen Pouchzelle;
- Figur 3: ein erstes bevorzugtes Ausführungsbeispiel eines erfindungsgemäßen Stacks; und
- Figur 4: ein erstes bevorzugtes Ausführungsbeispiel eines erfindungsgemäßen Verfahrens.

### Ausführungsbeispiele:

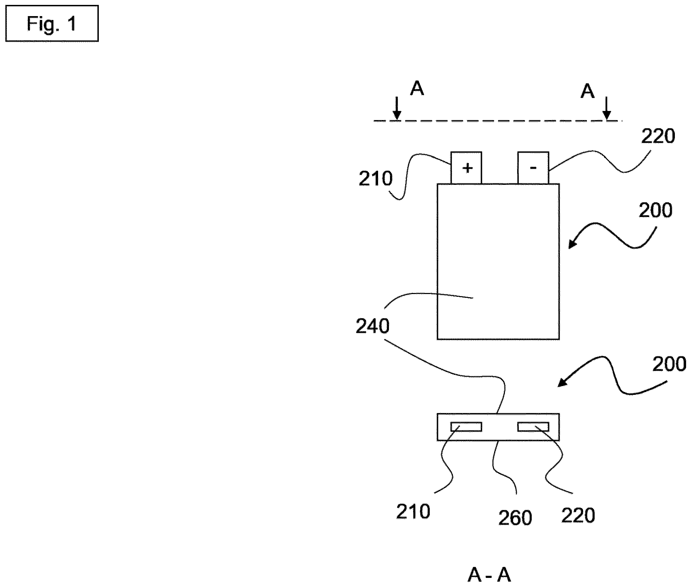

Eine Pouchzelle 200 des Standes der Technik ist in Figur 1 dargestellt. Die Pouchzelle 200 ist ausgestattet mit einer Plus-Kontaktfahne 210 und einer Minus-Kontaktfahne 220, über die die Pouchzelle 200 elektrisch kontaktiert und so beladen und entladen werden kann. Die Pouchzelle 200 ist flächig ausgebildet und weist eine Zelloberseite 240 sowie eine der Zelloberseite 210 gegenüberliegende Zellunterseite 260 auf.

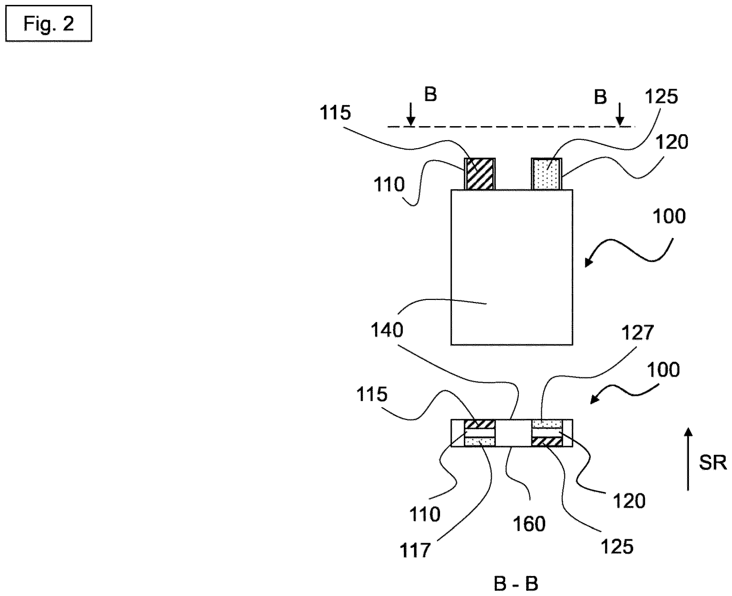

Ein bevorzugtes Ausführungsbeispiel einer erfindungsgemäßen Pouchzelle 100 ist in Figur 2 dargestellt. Die Pouchzelle 100 ist ausgestattet mit einer Plus-Kontaktfahne 110 und einer Minus-Kontaktfahne 120, über die die Pouchzelle 100 elektrisch kontaktiert und so beladen und entladen werden kann. Dabei besteht die Plus-Kontaktfahne 110 beispielhaft auf Aluminium. Die Minus-Kontaktfahne 120 besteht beispielhaft aus Nickel. Die Zelloberseite 140 und die Zellunterseite 160 der Pouchzelle sind im Wesentlichen flach ausgebildet.

Als Zelloberseite 140 der Pouchzelle 100 wird insbesondere diejenige flache Seite der Pouchzelle 100 verstanden die in Stapelrichtung SR oben liegt, wenn der Blick auf die Stirnseite der Pouchzelle 100 gerichtet ist und die Plus-Kontaktfahne 110 links von Minus-Kontaktfahne 120 befindlich ist. Als Zellunterseite 140 der Pouchzelle 100 wird insbesondere diejenige flache Seite der Pouchzelle 100 verstanden die in Stapelrichtung SR unten liegt, wenn der Blick auf die Stirnseite der Pouchzelle 100 gerichtet ist und die Plus-Kontaktfahne 110 links von Minus-Kontaktfahne 120 befindlich ist. Dies ist jeweils in der unteren Ansicht B-B der Figur 2 der Fall.

Wie der Figur 2 entnommen werden kann, weist die Plus-Kontaktfahne 110 auf der Zelloberseite 140 eine Leitbeschichtung 115 auf, die beispielhaft in Form einer zinnhaltigen Lötpaste bereitgestellt ist. Auf der Zellunterseite 160 weist die Plus-Kontaktfahne 110 eine Isolierbeschichtung 117 auf, die die beispielhaft in Form einer Keramik bereitgestellt ist. Die Minus-Kontaktfahne 120 ist, auf der Zelloberseite 140, ausgestattet mit einer Isolierbeschichtung 127 in Form einer Keramik. Auf der Zellunterseite 160 weist die Minus-Kontaktfahne 120 eine Leitbeschichtung 125 in Form einer zinnhaltigen Lötpaste auf. Die Beschichtungen 115, 117, 125, 127 decken die jeweiligen Oberflächen der Kontaktfahnen 110, 120 im Wesentlichen vollständig ab.

Die Isolierbeschichtung 117 der Plus-Kontaktfahne 110 und die Isolierbeschichtung 127 der Minus-Kontaktfahne 120 bestehen beispielhaft aus dem gleichen Material. Die Leitbeschichtung 115 der Plus-Kontaktfahne 110 und die Leitbeschichtung 125 der Minus-Kontaktfahne 120 bestehen beispielhaft aus dem gleichen Material. Beides muss nicht notwendigerweise der Fall sein.

In einem alternativen Ausführungsbeispiel (hier nicht gezeigt) kann die Beschichtung der Kontaktfahnen grundsätzlich umgekehrt erfolgten, nämlich derart, dass die Plus-Kontaktfahne zelloberseitig eine Isolierbeschichtung und zellunterseitig eine Leitbeschichtung aufweist und die Minus-Kontaktfahne zelloberseitig eine Leitbeschichtung und zellunterseitig eine Isolierbeschichtung aufweist. Es hat sich als vorteilhaft herausgestellt, wenn in einem Batch (oder bei einem Stack) eine Anfangs gewählte Beschichtungsalternative beibehalten wird.

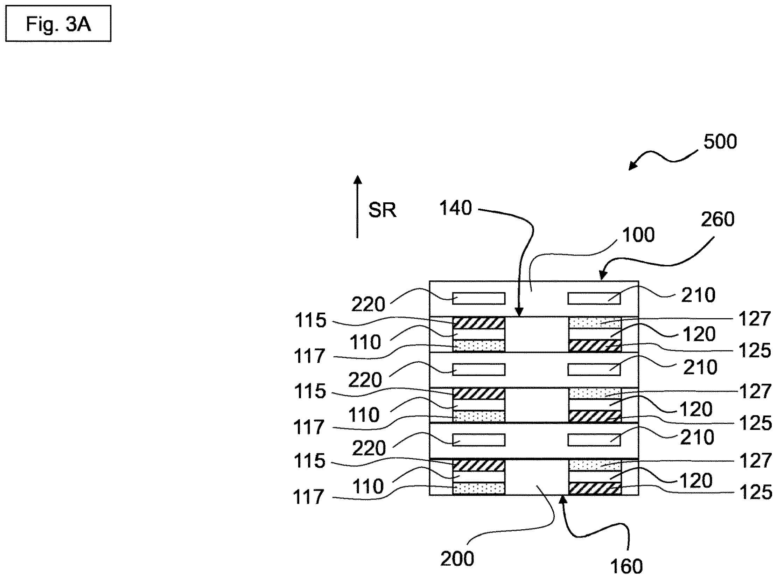

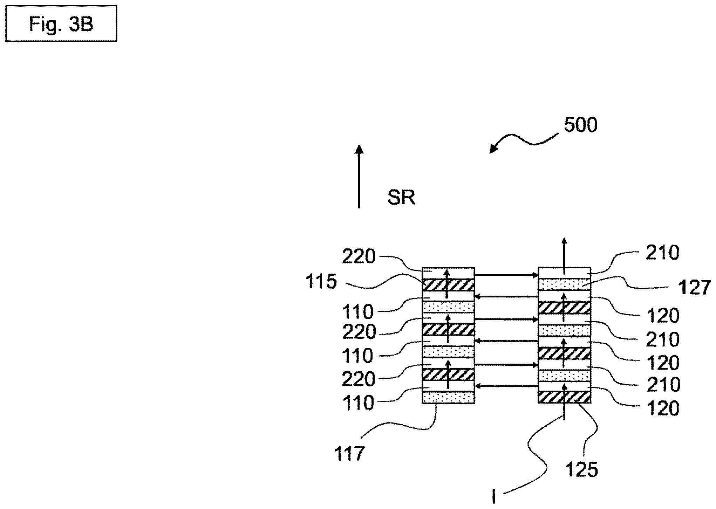

Die Pouchzelle 100 der Figur 2 schafft die Grundlage für ein einfaches und sicheres Kontaktieren eines Stacks 500, was im Folgenden mit Bezug auf Figur 3 genauer erläutert wird. Dabei zeigt Figur 3A das Stack 500 in assemblierten Zustand, d.h. vor dem elektrischen Kontaktieren. Das elektrisch kontaktierte Stack 500 ist in Figur 3B dargestellt.

Das Stack 500 weist beispielhaft sechs in Stapelrichtung SR gestapelte ("gestackte") Pouchzellen 100, 200 auf. Drei Pouchzellen 100 sind ersten Typs, d.h. die Plus-Kontaktfahne 110 weist zelloberseitig eine Leitbeschichtung 115 und zellunterseitig eine Isolierbeschichtung 117 auf und die Minus-Kontaktfahne 120 weist zelloberseitig eine Isolierbeschichtung 127 und zellunterseitig eine Leitbeschichtung 125 auf. Die drei Pouchzellen 100 des ersten Typs entsprechen dem Ausführungsbeispiel der Figur 2. Drei Pouchzellen 200 sind zweiten Typs, d.h. sie entsprechen Pouchzellen des Standes der Technik, gezeigt in Figur 1. Mit anderen Worten ist aus einer Gesamtmenge von hier beispielhaft sechs Pouchzellen eine Hälfte ersten Typs und die andere Hälfte zweiten Typs. Lediglich die Pouchzellen 100 des ersten Typs sind gemäß dem Ausführungsbeispiel der Figur 2 weitergebildet.

Die Pouchzellen 100 ersten Typs und die Pouchzellen 200 zweiten Typs sind jeweils alternierend gestapelt, d.h. im gezeigten Ausführungsbeispiel in Stapelrichtung SR gesehen von unten nach oben: Pouchzelle 100 ersten Typs, Pouchzelle 200 zweiten Typs, Pouchzelle 100 ersten Typs, usw.. Dabei sind die Pouchzellen 200 zweiten Typs, bezogen auf die Stapelrichtung SR, um 180 Grad gedreht, so dass die Plus-Kontaktfahnen 110 der Pouchzellen 100 ersten Typs in Stapelrichtung mit den Minus-Kontaktfahne 220 der Pouchzellen 200 zweiten Typs überlappen, insbesondere kongruent sind. Die Minus-Kontaktfahnen 120 der Pouchzellen 100 ersten Typs überlappen in Stapelrichtung mit den Plus-Kontaktfahnen 210 der Pouchzellen 200 zweiten Typs. Im Ausführungsbeispiel der Figur 3 sind die Minus-Kontaktfahnen 120 der Pouchzellen 100 ersten Typs kongruent mit den Plus-Kontaktfahnen 210 der Pouchzellen 200 zweiten Typs.

Das elektrisch kontaktierte Stack 500 ist in Figur 3B dargestellt. Ein elektrisches Kontaktieren kann beispielsweise mittels Verpressens in Stapelrichtung SR und/oder mittels Lötens erfolgen. In Figur 3B sind aus Darstellungsgründen die Konturen der Pouchzellen nicht dargestellt. Es sei ebenfalls darauf hingewiesen, dass eine Schichtdicke einer Leitbeschichtung 115 - wenn diese beispielsweise in Form von Lötpaste bereitgestellt ist - im Zuge des Lötens typischerweise abnimmt. Auf Grund der alternierenden Stapelung der Pouchzellen ersten Typs und der Pouchzellen zweiten Typs, wobei die Pouchzellen zweiten Typs um 180 Grad, bezogen auf die Stapelrichtung SR, gedreht sind, ergibt sich ein elektrische Reihenschaltung im Stack 500. Der finale Fluss es Stroms I (physikalische Stromrichtung) ist durch die Richtungspfeile angedeutet. Die horizontalen Richtungspfeile weisen dabei auf den Stromfluss innerhalb einer jeweiligen Pouchzelle hin, die vertikalen Richtungspfeile auf einen Stromfluss zwischen Kontaktfahnen jeweils benachbarter Zellen.

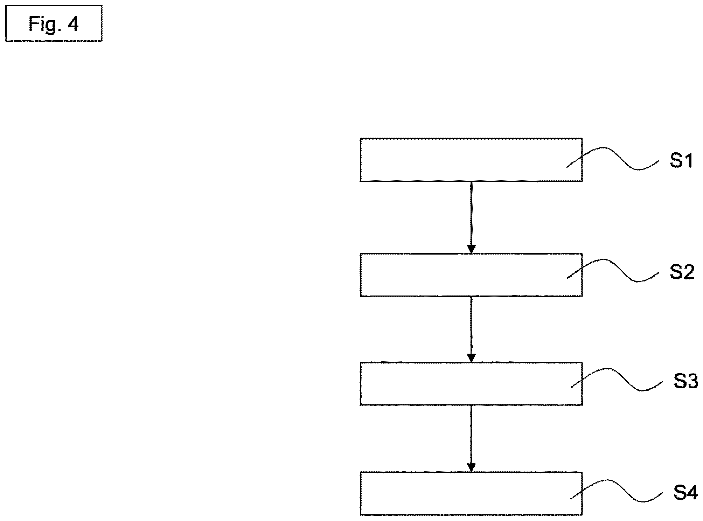

Figur 4 zeigt schließlich ein erstes bevorzugtes Ausführungsbeispiel eins erfindungsgemäßen Verfahrens zum Herstellen eines Stacks mit einer Mehrzahl von Pouchzellen. Durch ein solches Verfahren kann beispielsweise der in Figur 3B dargestellte Stack 500 erhalten werden.

In einem ersten Schritt S1 erfolgt ein Bereitstellen einer Mehrzahl von Pouchzellen, wobei die Pouchzellen jeweils ausgestattet sind mit einer Plus-Kontaktfahne und einer Minus-Kontaktfahne, über die die Pouchzellen elektrisch kontaktiert und so beladen und entladen werden können. Die Pouchzellen sind flächig ausgebildet und weisen eine Zelloberseite sowie eine der Zelloberseite gegenüberliegende Zellunterseite auf.

In einem sich anschließenden Schritt S2 erfolgt ein Beschichtungsvorgangs bei der Hälfte der Pouchzellen derart, dass die Plus-Kontaktfahne zelloberseitig eine Leitbeschichtung und zellunterseitig eine Isolierbeschichtung aufweist und die Minus-Kontaktfahne zelloberseitig eine Isolierbeschichtung und zellunterseitig eine Leitbeschichtung aufweist. Die so erhaltenen Pouchzellen definieren einen ersten Typ (vgl. Figur 2). Die verbleibenden Pouchzellen (die jeweiligen Kontaktfahnen werden nicht zusätzlich beschichtet) definieren einen zweiten Typ (vgl. Figur 1).

In einem sich anschließenden Schritt S3 erfolgt ein Assemblieren des Stacks durch alternierendes Stapeln der Pouchzellen ersten und zweiten Typs, wobei komplementäre Kontaktfahnen der Pouchzellen in Stapelrichtung jeweils kongruent sind (vgl. Figur 3A).

In einem sich anschließenden Schritt S4 wird das Stack durch Verpressen (Aufbringen eines Drucks in Stapelrichtung) und Verlöten (thermisch induziert) elektrisch kontaktiert. Am Ende des Schritts 4 liegt beispielsweise ein Stack vor wie er in der Figur 3B dargestellt ist.

### Bezugszeichenliste

- 100: Pouchzelle
- 110: Plus-Kontaktfahne
- 115: Leitbeschichtung
- 117: Isolierbeschichtung
- 120: Minus-Kontaktfahne
- 125: Leitbeschichtung
- 127: Isolierbeschichtung
- 140: Zelloberseite
- 160: Zellunterseite

- 200: Pouchzelle des Standes der Technik
- 210: Plus-Kontaktfahne
- 220: Minus-Kontaktfahne
- 240: Zelloberseite
- 260: Zellunterseite

- I: Strom
- SR: Stapelrichtung
- S1.S4: Verfahrensschritte

## Patentansprüche

1. Pouchzelle (100) mit einer Plus-Kontaktfahne (110) und einer Minus-Kontaktfahne (120), über die die Pouchzelle (100) elektrisch kontaktiert und so beladen und entladen werden kann, wobei die Pouchzelle (100) flächig ausgebildet ist und eine Zelloberseite (140) sowie eine der Zelloberseite (140) gegenüberliegende Zellunterseite (160) aufweist,
**dadurch gekennzeichnet, dass** die Plus-Kontaktfahne (110) zelloberseitig eine Leitbeschichtung (115) und zellunterseitig eine Isolierbeschichtung (117) aufweist und die Minus-Kontaktfahne (120) zelloberseitig eine Isolierbeschichtung (127) und zellunterseitig eine Leitbeschichtung (125) aufweist, oder umgekehrt, dass die Plus-Kontaktfahne zelloberseitig eine Isolierbeschichtung und zellunterseitig eine Leitbeschichtung aufweist und die Minus-Kontaktfahne zelloberseitig eine Leitbeschichtung und zellunterseitig eine Isolierbeschichtung aufweist.

2. Pouchzelle (100) nach Anspruch 1,
**dadurch gekennzeichnet, dass** die Isolierbeschichtung (117, 127) aus Keramik besteht oder Keramik aufweist, und/oder dass die Leitbeschichtung (115, 125) aus einer Zinnlegierung besteht oder eine Zinnlegierung aufweist.

3. Pouchzelle (100) nach Anspruch 1 oder 2,
**dadurch gekennzeichnet, dass** die Plus-Kontaktfahne (110) aus Aluminium besteht oder Aluminium aufweist und/oder dass die Minus-Kontaktfahne (120) aus Nickel besteht oder Nickel aufweist.

4. Pouchzelle (100) nach einem der vorangehenden Ansprüche,
**dadurch gekennzeichnet, dass** die Leitbeschichtung (115, 125) und/oder die Isolierbeschichtung (117, 127) aus einem anderen Material als die Kontaktfahnen bestehen.

5. Pouchzelle (100) nach einem der vorangehenden Ansprüche,
**dadurch gekennzeichnet, dass** die Leitbeschichtung (115, 125) und/oder die Isolierbeschichtung (117, 127) auf einem selbstklebenden Trägermaterial bereitgestellt ist.

6. Pouchzelle (100) nach einem der vorangehenden Ansprüche,
**dadurch gekennzeichnet, dass** die Plus-Kontaktfahne (110) und die Minus-Kontaktfahne (120) jeweils flach und zum Kontaktieren mittels Verpressens und/oder mittels Lötens ausgebildet sind.

7. Pouchzelle (100) nach einem der vorangehenden Ansprüche,
**dadurch gekennzeichnet, dass** die Zelloberseite (140) und die Zellunterseite (160) im Wesentlichen flach sind.

8. Stack (500) mit wenigstens zwei Pouchzellen (100, 200), wobei die Pouchzellen (100, 200) jeweils ausgestattet sind mit einer Plus-Kontaktfahne (110, 210) und einer Minus-Kontaktfahne (120, 220), über die die Pouchzellen (100, 200) elektrisch kontaktiert und so beladen und entladen werden können, wobei die Pouchzellen (100, 200) flächig ausgebildet sind und eine Zelloberseite (110, 210) sowie eine der Zelloberseite (110, 210) gegenüberliegende Zellunterseite (120, 200) aufweisen,
**dadurch gekennzeichnet, dass** eine erste (100), insbesondere lediglich die erste (100) der beiden Pouchzellen (100, 200) derart weitergebildet ist, dass die Plus-Kontaktfahne (110) zelloberseitig eine Leitbeschichtung (115) und zellunterseitig eine Isolierbeschichtung (117) aufweist und die Minus-Kontaktfahne (120) zelloberseitig eine Isolierbeschichtung (127) und zellunterseitig eine Leitbeschichtung (125) aufweist, oder dass die Plus-Kontaktfahne zelloberseitig eine Isolierbeschichtung und zellunterseitig eine Leitbeschichtung aufweist und die Minus-Kontaktfahne (20) zelloberseitig eine Leitbeschichtung und zellunterseitig eine Isolierbeschichtung aufweist, und wobei sich die komplementäre Kontaktfahnen (110, 220; 120,210) der zwei Pouchzellen (100, 200) jeweils überlappen.

9. Stack (500) nach Anspruch 8,
**dadurch gekennzeichnet, dass** eine Mehrzahl erster (100) und zweiter (200) Pouchzellen vorgesehen ist, die alternierend gestapelt sind.

10. Stack (500) nach Anspruch 8 oder 9,
**dadurch gekennzeichnet, dass** die erste Pouchzelle (100) gemäß wenigstens einem der Ansprüche 2 bis 7 weitergebildet ist.

11. Stack (500) aufweisend eine Mehrzahl von Pouchzellen (100, 200) nach einem der vorangehenden Ansprüche, wobei die Pouchzellen (100) über ihre jeweiligen Kontaktfahnen (110, 210; 210, 220) elektrisch miteinander kontaktiert sind.

12. Verfahren zum Herstellen eines Stacks mit einer Mehrzahl von Pouchzellen,
**dadurch gekennzeichnet, dass** das Verfahren die folgenden Schritte aufweist:
- (S1) Bereitstellen einer Mehrzahl von Pouchzellen, wobei die Pouchzellen jeweils ausgestattet sind mit einer Plus-Kontaktfahne und einer Minus-Kontaktfahne, über die die Pouchzellen elektrisch kontaktiert und so beladen und entladen werden können, wobei die Pouchzellen flächig ausgebildet sind und eine Zelloberseite sowie eine der Zelloberseite gegenüberliegende Zellunterseite aufweisen,
- (S2) Durchführen eines Beschichtungsvorgangs bei Untermenge, vorzugsweise bei der Hälfte der Pouchzellen derart, dass die Plus-Kontaktfahne zelloberseitig eine Leitbeschichtung und zellunterseitig eine Isolierbeschichtung aufweist und die Minus-Kontaktfahne zelloberseitig eine Isolierbeschichtung und zellunterseitig eine Leitbeschichtung aufweist, oder dass die Plus-Kontaktfahne zelloberseitig eine Isolierbeschichtung und zellunterseitig eine Leitbeschichtung aufweist und die Minus-Kontaktfahne zelloberseitig eine Leitbeschichtung und zellunterseitig eine Isolierbeschichtung aufweist, wobei die so beschichteten Pouchzellen einen ersten Typ definieren und die verbleibenden Pouchzellen einen zweiten Typ bilden,
- (S3) Assemblieren des Stacks durch alternierendes Stapeln der Pouchzellen ersten und zweiten Typs, wobei sich komplementäre Kontaktfahnen der Pouchzellen jeweils überlappen.

13. Verfahren nach Anspruch 12,
**dadurch gekennzeichnet, dass** das Stack durch Verpressen und/oder durch Löten elektrisch kontaktiert (S4) wird.

## Claims

1. Pouch cell (100) having a positive contact lug (110) and a negative contact lug (120), by means of which contact lugs electrical contact can be made with the pouch cell (100) and said pouch cell can be charged and discharged in this way, wherein the pouch cell (100) is of planar design and has a cell top side (140) as well as a cell bottom side (160) which is situated opposite the cell top side (140),
**characterized in that** the positive contact lug (110) has a conductive coating (115) on the cell top side and an insulating coating (117) on the cell bottom side and the negative contact lug (120) has an insulating coating (127) on the cell top side and a conductive coating (125) on the cell bottom side, or vice versa, **in that** the positive contact lug has an insulating coating on the cell top side and a conductive coating on the cell bottom side and the negative contact lug has a conductive coating on the cell top side and an insulating coating on the cell bottom side.

2. Pouch cell (100) according to Claim 1,
**characterized in that** the insulating coating (117, 127) consists of ceramic or comprises ceramic, and/or **in that** the conductive coating (115, 125) consists of a tin alloy or comprises a tin alloy.

3. Pouch cell (100) according to Claim 1 or 2,
**characterized in that** the positive contact lug (110) consists of aluminium or comprises aluminium and/or **in that** the negative contact lug (120) consists of nickel or comprises nickel.

4. Pouch cell (100) according to one of the preceding claims,
**characterized in that** the conductive coating (115, 125) and/or the insulating coating (117, 127) consist/consists of a material different to that of the contact lugs.

5. Pouch cell (100) according to one of the preceding claims,
**characterized in that** the conductive coating (115, 125) and/or the insulating coating (117, 127) are/is provided on a self-adhesive carrier material.

6. Pouch cell (100) according to one of the preceding claims,
**characterized in that** the positive contact lug (110) and the negative contact lug (120) are each flat and designed for contact-connection by means of pressing and/or by means of soldering.

7. Pouch cell (100) according to one of the preceding claims,
**characterized in that** the cell top side (140) and the cell bottom side (160) are substantially flat.

8. Stack (500) having at least two pouch cells (100, 200), wherein the pouch cells (100, 200) are each equipped with a positive contact lug (110, 210) and a negative contact lug (120, 220), by means of which contact lugs electrical contact can be made with the pouch cells (100, 200) and said pouch cells can be charged and discharged in this way, wherein the pouch cells (100, 200) are of planar design and have a cell top side (110, 210) as well as a cell bottom side (120, 200) which is situated opposite the cell top side (110, 210),
**characterized in that** a first (100), in particular only the first (100), of the two pouch cells (100, 200) is developed in such a way that the positive contact lug (110) has a conductive coating (115) on the cell top side and an insulating coating (117) on the cell bottom side and the negative contact lug (120) has an insulating coating (127) on the cell top side and a conductive coating (125) on the cell bottom side, or **in that** the positive contact lug has an insulating coating on the cell top side and a conductive coating on the cell bottom side and the negative contact lug (20) has a conductive coating on the cell top side and an insulating coating on the cell bottom side, and wherein the complementary contact lugs (110, 220; 120, 210) of the two pouch cells (100, 200) respectively overlap.

9. Stack (500) according to Claim 8,
**characterized in that** a plurality of first (100) and second (200) pouch cells are provided and are stacked alternately.

10. Stack (500) according to Claim 8 or 9,
**characterized in that** the first pouch cell (100) is developed according to at least one of Claims 2 to 7.

11. Stack (500) having a plurality of pouch cells (100, 200) according to one of the preceding claims, wherein the pouch cells (100) are electrically contact-connected to one another by means of their respective contact lugs (110, 210; 210, 220).

12. Method for producing a stack having a plurality of pouch cells,
**characterized in that** the method comprises the following steps:
- (S1) providing a plurality of pouch cells, wherein the pouch cells are each equipped with a positive contact lug and a negative contact lug, by means of which contact lugs electrical contact can be made with the pouch cells and said pouch cells can be charged and discharged in this way, wherein the pouch cells are of planar design and have a cell top side as well as a cell bottom side which is situated opposite the cell top side,
- (S2) carrying out a coating process for a subset, preferably for half, of the pouch cells in such a way that the positive contact lug has a conductive coating on the cell top side and an insulating coating on the cell bottom side and the negative contact lug has an insulating coating on the cell top side and a conductive coating on the cell bottom side, or that the positive contact lug has an insulating coating on the cell top side and a conductive coating on the cell bottom side and the negative contact lug has a conductive coating on the cell top side and an insulating coating on the cell bottom side, wherein the pouch cells coated in this way define a first type and the remaining pouch cells form a second type,
- (S3) assembling the stack by alternately stacking the pouch cells of the first and the second type, wherein complementary contact lugs of the pouch cells respectively overlap.

13. Method according to Claim 12,
**characterized in that** the stack is electrically contact-connected by pressing and/or by soldering (S4).

## Revendications

1. Cellule de poche (100) comprenant une cosse de contact plus (110) et une cosse de contact moins (120), par le biais desquelles la cellule de poche (100) peut être mise en contact électrique et ainsi chargée et déchargée, la cellule de poche (100) étant sensiblement bidimensionnelle et comportant un côté de cellule supérieur (140) et un côté de cellule inférieur (160) opposé au côté de cellule supérieur (140),
**caractérisée en ce que** la cosse de contact plus (110) comporte un revêtement conducteur (115) du côté de cellule supérieur et un revêtement isolant (117) du côté de cellule inférieur et la cosse de contact moins (120) comporte un revêtement isolant (127) du côté de cellule supérieur et un revêtement conducteur (125) du côté de cellule inférieur, ou à l'inverse, la cosse de contact plus comporte un revêtement isolant du côté de cellule supérieur et un revêtement conducteur du côté de cellule inférieur et la cosse de contact moins comporte un revêtement conducteur du côté de cellule supérieur et un revêtement isolant du côté de cellule inférieur.

2. Cellule de poche (100) selon la revendication 1,
**caractérisée en ce que** le revêtement isolant (117, 127) est en céramique ou comporte de la céramique, et/ou **en ce que** le revêtement conducteur (115, 125) est en un alliage d'étain ou comporte un alliage d'étain.

3. Cellule de poche (100) selon la revendication 1 ou 2,
**caractérisée en ce que** la cosse de contact plus (110) est en aluminium ou comporte de l'aluminium et/ou **en ce que** la cosse de contact moins (120) est en nickel ou comporte du nickel.

4. Cellule de poche (100) selon l'une des revendications précédentes,
**caractérisée en ce que** le revêtement conducteur (115, 125) et/ou le revêtement isolant (117, 127) sont en une matière différente de celle des cosses de contact.

5. Cellule de poche (100) selon l'une des revendications précédentes,
**caractérisée en ce que** le revêtement conducteur (115, 125) et/ou le revêtement isolant (117, 127) sont prévus sur une matière de support autocollante.

6. Cellule de poche (100) selon l'une des revendications précédentes,
**caractérisée en ce que** la cosse de contact plus (110) et la cosse de contact moins (120) sont chacune plates et conçues pour être mises en contact par pressage et/ou par brasage.

7. Cellule de poche (100) selon l'une des revendications précédentes,
**caractérisée en ce que** le côté de cellule supérieure (140) et le côté de cellule inférieure (160) sont sensiblement plats.

8. Empilement (500) comprenant au moins deux cellules de poche (100, 200), les cellules de poche (100, 200) étant chacune équipées d'une cosse de contact plus (110, 210) et d'une cosse de contact moins (120, 220), par le biais desquelles les cellules de poche (100, 200) peuvent être mises en contact électrique et ainsi chargées et déchargées, les cellules de poche (100, 200) étant sensiblement bidimensionnelles et comportant un côté de cellule supérieur (110, 210) et un côté de cellule inférieur (120, 200) opposé au côté de cellule supérieur (110, 210),
**caractérisé en ce que** la première (100), en particulier seulement la première (100), des deux cellules de poche (100, 200) est conçue de telle sorte que la cosse de contact plus (110) comporte un revêtement conducteur (115) du côté de cellule supérieur et un revêtement isolant (117) du côté de cellule inférieur et la cosse de contact moins (120) comporte un revêtement isolant (127) du côté de cellule supérieur et un revêtement conducteur (125) du côté de cellule inférieur, ou **en ce que** la cosse de contact plus comporte un revêtement isolant du côté de cellule supérieur et un revêtement conducteur du côté de cellule inférieur et **en ce que** la cosse de contact moins (20) comporte un revêtement conducteur du côté de cellule supérieur et un revêtement isolant du côté de cellule inférieur, et les cosses de contact complémentaires (110, 220; 120, 210) des deux cellules de poche (100, 200) se chevauchant.

9. Empilement (500) selon la revendication 8,
**caractérisé en ce qu'**une pluralité de premières (100) et deuxièmes (200) cellules de poche sont prévues qui sont empilées de manière alternée.

10. Empilement (500) selon la revendication 8 ou 9,
**caractérisé en ce que** la première cellule de poche (100) est conçue selon l'une au moins des revendications 2 à 7.

11. Empilement (500) comportant une pluralité de cellules de poche (100, 200) selon l'une des revendications précédentes, les cellules de poche (100) étant en contact électrique les unes avec les autres par le biais de leurs cosses de contact respectives (110, 210 ; 210, 220).

12. Procédé de réalisation d'un empilement comportant une pluralité de cellules de poche , **caractérisé en ce que** le procédé comporte les étapes suivantes :
- (S1) fournir une pluralité de cellules de poche, les cellules de poche étant chacune équipées d'une cosse de contact plus et d'une cosse de contact moins par le biais desquelles les cellules de poche peuvent être mises en contact électrique et ainsi chargées et déchargées, les cellules de poche étant sensiblement bidimensionnelles et comportant un côté de cellule supérieur et un côté de cellule inférieur opposé au côté de cellule supérieur,
- (S2) réaliser un processus de revêtement sur un sous-ensemble, de préférence sur la moitié des cellules de poche, de manière à ce que la cosse de contact plus comporte un revêtement conducteur du côté de cellule supérieur et un revêtement isolant du côté de cellule inférieur et la cosse de contact moins comporte un revêtement isolant du côté de cellule supérieur et un revêtement conducteur du côté de cellule inférieur, ou **en ce que** la cosse de contact plus comporte un revêtement isolant du côté de cellule supérieur et un revêtement conducteur du côté de cellule supérieur et la cosse de contact moins comporte un revêtement conducteur du côté de cellule supérieur et un revêtement isolant du côté de cellule inférieur, les cellules de poche ainsi recouvertes définissant un premier type et les cellules de poche restantes formant un deuxième type,
- (S3) assembler l'empilement de manière à ce que les cellules de poche des premier et deuxième types soient empilées de manière alternée, les cosses de contact complémentaires des cellules de la poche se chevauchant.

13. Procédé selon la revendication 12,
**caractérisé en ce que** l'empilement est mis en contact électrique (S4) par pressage et/ou brasage.
